# EUROPEAN PATENT APPLICATION

(11) **EP 0 782 129 A2**
(43) Date of publication of application: **02.07.1997**
(21) Application number: 96119480.0
(22) Date of filing: 04.12.1996
(51) Int. Cl.: G11B 5/39

(54) **Magnetoresistive cpp mode transducer with multiple spin valve members**

(30) Priority: 29.12.1995 US 580661
(71) Applicant: READ-RITE CORPORATION, Milpitas California 95035 (US)
(72) Inventor: Rottmayer, Robert Earl, Fremont, California 94539 (US); Tong, Hua-Ching, San Jose, California 95120 (US)
(74) Representative: Körber, Wolfhart, Dr. rer.nat.

(57) **Abstract**

A magnetoresistive sensing device employs a plurality of spin valve giant magnetoresistive sensors (123) with sense current flowing through the sensors in a direction perpendicular to the plane of the sensors. The spin valve sensors alternate in the structure with nonmagnetic spacer layers.

## Description

### CROSS-REFERENCE TO RELATED PATENT APPLICATION

U.S. Patent Application serial No. 08/337,878, filed November 14, 1994, assigned to the same assignee as the present application, discloses a transducer employing a giant magnetoresistive (GMR) element with a magnetic bias and utilizing a sense current flow perpendicular (CPP mode) to the plane of the GMR element.

### BACKGROUND OF THE INVENTION

### Field of the Invention

This invention relates to magnetoresistive (MR) transducers and in particular to MR transducers employing a plurality of spin-valve members.

### Description of the Prior Art

The prior art discloses a type of magnetic transducer, referred to as an MR sensor or head, which is capable of reading data from a magnetic surface at great linear densities. An MR sensor detects magnetic field signals through the resistance changes of a magnetic read element as a function of the amount and direction of magnetic flux signals being sensed by the element.

Write operations are carried out inductively using a pair of spaced magnetic pole members. These magnetic write pole members form a magnetic path and define a nonmagnetic transducing gap in a pole tip region, with the pole members in contact with each other at a back closure region. The transducing gap is positioned to fly close to the surface of an adjacent recording medium, such as a magnetic disk, for example.

Some of these prior art MR sensors operate on the basis of the anisotropic magnetoresistive (AMR) effect, in which a component of the sensor resistance varies as the square of the cosine of the angle between the magnetization direction and the direction of current flow. These MR sensors function as a result of the AMR effect, even though this effect Produces a relatively small percentage change in the resistance of the magnetic element.

Another type of MR sensor has been identified in which the resistance between two uncoupled ferromagnetic layers varies as the cosine of the angle between the directions of magnetization of the two layers and is independent of the direction of current flow. This mechanism produces a magnetoresistance that, for selected combinations of materials, is greater in magnitude than the AMR effect, and is referred to as "spin valve" (SV) magnetoresistance.

A publication entitled Design, Fabrication and Testing of Spin-Valve Read Heads for High Density Recording, Tsang et al, IEEE Transactions On Magnetics, November 1994, pages 3801-3806, describes an SV structure in which a first ferromagnetic layer is fixed or "pinned" in its magnetic orientation direction and a second ferromagnetic layer separated from the first layer has its magnetic moment free to rotate in response to signal fields to be sensed.

U.S. Patent 5,159,513, Dieny et al, discloses an SV sensor comprising a layered structure formed on a substrate and includes first and second thin film layers of magnetic material separated by a thin film layer of nonmagnetic metallic material. The magnetization direction of the first ferromagnetic layer at zero applied field is set substantially perpendicular to the magnetization direction of the second ferromagnetic layer which is fixed or pinned in position. A current flow is produced through the sensor and the variations in voltage across the MR sensor, due to the changes in resistance produced by rotation of the magnetization direction in the first layer of ferromagnetic material as a function of the magnetic field being sensed, are detected.

In many MR heads, the MR element is electrically isolated from a pair of magnetic shields, and a separate set of conductors are provided on one surface of the MR element to pass a reference current through the MR element in a so-called current-in-the-plane (CIP) mode. The CIP mode can create problems such as shorting due to electromigration, and, additionally, a CIP mode MR element can be relatively large in size and expensive to mass produce because of its complex construction.

As an alternate to CIP mode MR heads, a type of MR sensor is utilized in which the sense current flows through the MR element in a direction perpendicular-to-the-plane (CPP) of the MR element. These CPP mode heads have a number of advantages over CIP mode heads, including the fact that the read signal produced by CPP heads is essentially independent of the signal track width. An example of such a CPP mode MR sensor in a giant magnetoresistive (GMR) sensor is described in the publication A New Design For An Ultra-High Density Magnetic Recording Head Using A GMR Sensor In The CPP Mode, Rottmayer et al, IEEE Transactions On Magnetics, Volume 31, No. 6, 2597, November 1995.

### SUMMARY OF THE INVENTION

In accordance with this invention, an MR sensor is provided which employs a plurality of SV elements. The SV elements are positioned in the structure between a pair of spaced conductors carrying sense current which flows between the conductors to produce operation of the SV elements in the CPP mode. The transducer structure of this invention provides a sensor which is self-aligning with a data track on the recording medium.

### DESCRIPTION OF THE DRAWINGS

Figure 1 is side view, partly in cross-section, of a transducer in accordance with the invention;
Figure 2 is a view along plane 2-2 of Fig. 1 showing details of the read portion of the transducer;
Figure 3A is a cross-section showing details of the read portion of the transducer including the spin valves and adjacent conductor members;
Figure 3B is a cross-section showing the structure of a typical spin valve; and
Figure 4 is a diagram illustrating the rotation of magnetization direction in a spin valve sensor.

### DESCRIPTION OF THE PREFERRED EMBODIMENT

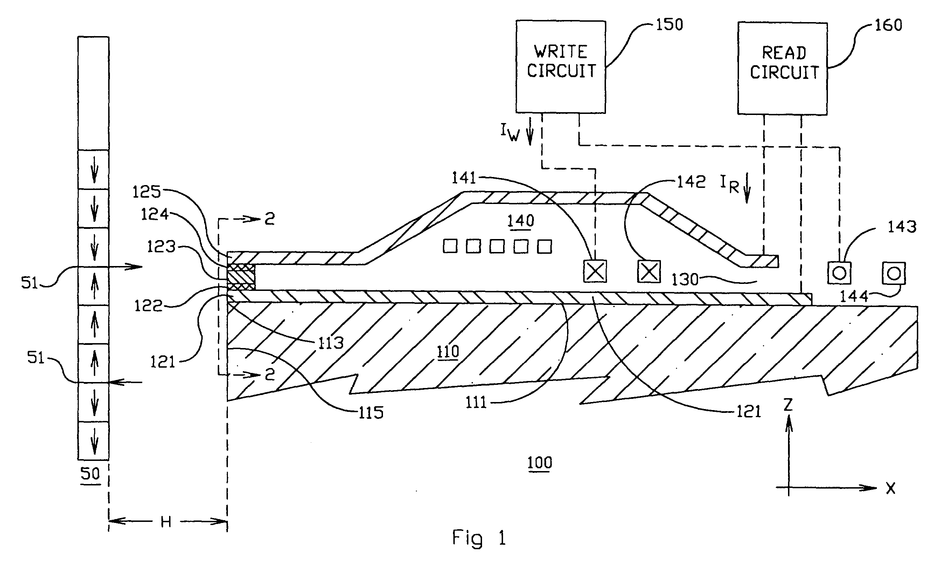

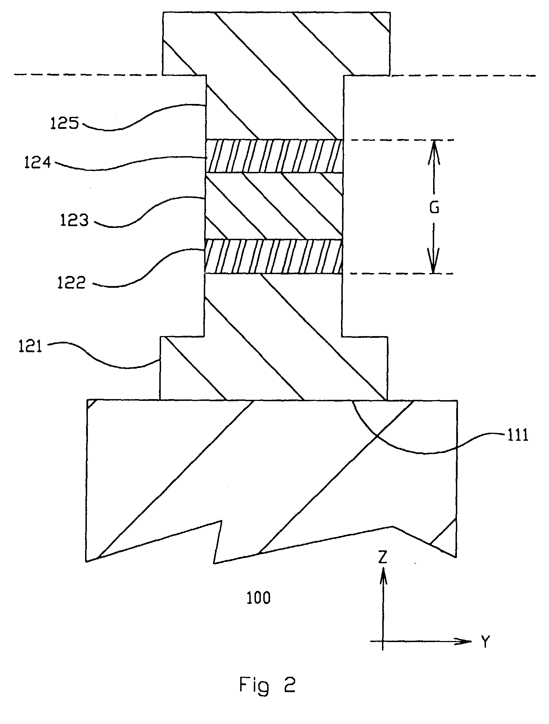

Figs. 1 and 2 show a head structure 100 and a magnetic medium 50 which moves relative to head structure 100 along the Z direction (+Z or -Z). Head structure 100 is spaced from magnetic medium 50 in the X direction by an aerodynamically-defined flying height H. As head structure 100 is passed by transition regions 51 in medium 50, a magnetoresistive portion 123 of head structure 100 detects the flux or fringe fields and responds by changing its resistance. A slider-shaped substrate 110 made of a magnetically nonconductive material such as ceramic forms a bulk portion of head structure 100 and provides aerodynamic lift.

Substrate 110 has a substantially planar top surface 111 extending in the X direction and a medium-facing sidewall 115 cut substantially at right angles to top surface 111 so as to extend in the Z direction. A first pole/shield layer 121, made of a material that is both magnetically and electrically conductive (an EC/MC paterial), is formed conformably on substrate top surface 111 extending to forward edge 113. The material of first pole/shield layer 121 can be a nickel-iron composition, such as Permalloy, or a ferromagnetic material with high permeability. The Z direction thickness of first pole/shield layer 121 is preferably in the range of 1 to 4 microns.

A first conductor or contact element 122 made of an electrically conductive but magnetically nonconductive material (an EC/MN material) is formed over a forward portion of pole/shield layer 121, near the substrate's forward edge 113. First contact element 122 can be composed of one or a combination of EC/MN materials selected for example from the group consisting of: copper, gold, silver, and alloys of these metals. The Z direction thickness of first contact element 122 is preferably in the range of 200 Å to 2,000 Å.

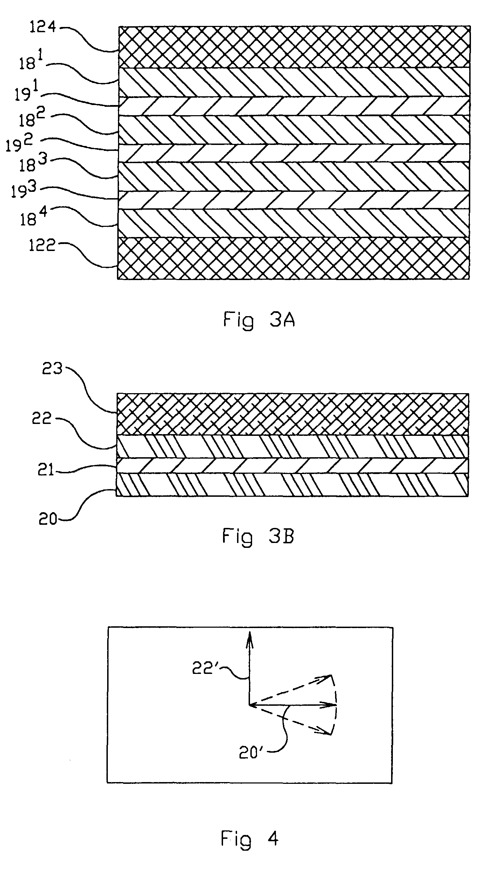

An MR element 123 is formed over first contact element 122, as shown in more detail in Figs. 2, 3A and 3B. As known, the electric resistance of such an MR element 123 varies when exposed to a time-varying magnetic flux. Unlike inductive transducers, an MR element is sensitive to the magnitude of a flux transition rather than to the rate of change of the flux transition. This gives MR elements certain advantages over inductive transducers, such as insensitivity to medium speed changes. The overall Z direction thickness of element 123 is preferably in the range of 50 Å to 2,000 Å.

A second contact element 124 made of an EC/MN material that is the same or equivalent to that of first contact element 122 is formed over MR element 123. The Z direction thickness of second contact element 124 is substantially the same as that of first contact element 122. A second pole/shield layer 125, made of an EC/MC material that is the same or equivalent to that of first pole/shield layer 121, is formed over second contact element 124. The Z direction thickness of second pole/shield layer 125 is substantially the same as or greater than that of first pole/shield layer 121.

First and second pole/shield layers 121 and 125 extend in the +X directon beyond sandwiched elements 122 through 124 to define a back gap 130. Back gap 130 is filled with a material that is at least electrically nonconductive (EN/MX material) and more preferably with a material that is both magnetically and electrically nonconductive (EN/MN) such as Al₂O₃, or hard-baked resist. The space at forward edge 113 between the top of first pole/shield layer 121 and the bottom of second pole/shield layer 125 defines a forward gap G (Fig. 2). The dimension of forward gap G is defined by the combined Z direction thicknesses of first contact element 122, MR element 123 and second contact element 124. The X direction width of elements 122 through 124 is preferably 0.2 to 0.4µ.

A planar write coil 140 having electrically conductive winding members indicated at 141-144 is formed about the back gap 130 and electrically insulated from first and second pole/shield layers 121 and 125 by a EN/MN fill and planarizing structure. A write circuit 150 connects to opposed ends of coil 140, and during a write mode sends electrical current I_{W} passing in a first direction through winding members 141-142 positioned on a forward side of back gap 130 and sends electrical current passing in a second, opposite direction through winding members 143-144 positioned on a rear side of back gap 130, to thereby induce flux flow through the forward and back gaps. Changes in flux flow across the forward gap produce different magnetic orientations of the magnetized regions in magnetic medium 50 during a write operation.

A read circuit 160 connects to opposed back ends of the first and second pole/shield layers 121 and 125, and during a read mode sends a sensing electric current I_{R} passing in the Z direction through sandwiched elements 122, 123, 124. The read-sense current I_{R} flows perpendicularly through MR element 123, thus avoiding the CIP electromigration problems discussed above.

Figs. 3A and 3B illustrate details of the read-back sensor structure (Fig. 3A) and a typical spin valve structure within the read-back structure (Fig. 3B). In Fig. 3A, conductors 124, 122 are shown located above and below the spin valve structures. This structure includes a plurality of spin valve members 18₁, 18₂, 18₃, 18₄ separated by spacers 19₁, 19₂, 19₃ of a suitable nonmagnetic material such as Cu, Ag, Au, or the like. The number of spin valve sensors employed depends on space limitations in the transducing gap and on fabrication complexities. The number of such sensors shown in Fig. 3A is representative only and is not meant to limit the invention.

The structure of a typical spin valve is shown in Fig. 3B and includes a free layer 20 of a suitable magnetic material such as NiFe or NiFeCo. A spacer layer 21 such as Cu, Ag, Au, or the like, positioned above free layer 20 and is followed by a pinned magnetic layer 22 of a suitable magnetic material such as NiFe, NiFeCo, Co, or the like. Layer 22 is followed by an exchange bias layer 23 of FeMn, NiMn, TbCo, or the like.

Fig. 4 shows the operation of the spin valve structure in which arrow 22' represents the direction of magnetization of magnetically pinned layer 22, while arrow 20' and its associated dotted lines indicate the movement of the direction of magnetization of free layer 20 in response to a varying magnetic field from the magnetic medium.

## Claims

1. A magnetoresistive sensing device comprising:
a magnetoresistive sensor (123) including a plurality of spin valve members,
each of said spin valve members including a free magnetic layer and a pinned magnetic layer spaced from said free layer by a nonmagnetic layer; and
electrically conductive means (122, 124) in contact with said magnetoresistive sensor (123) for supplying sense current thereto so that said sense current flows through said sensor in a direction perpendicular to the plane of said sensor.

2. A sensing device as in Claim 1, in which said conductive means (122, 124) includes a pair of pole/shield layers (121, 125) disposed on opposite sides of said magnetoresistive sensor (123) and magnetically coupled thereto to form a transducing gap.

3. A sensing device as in Claim 2, wherin the number of spin valve members is proportional to the size of said transducing gap.

4. A sensing device as in Claim 2 or 3, including write coil means (140) magnetically coupled to said pole/shield layers (121, 125) for supplying a write flux to said sensing device.

5. A sensing device as in anyone of Claims 2, 3 or 4 in which said spin valve members are positioned between a pair of electrically conductive layers and said electrically conductive layers are positioned between said pole/shield layers (121, 125).
